# EUROPEAN PATENT APPLICATION

(11) **EP 4 443 717 A1**
(43) Date of publication of application: **09.10.2024**
(21) Application number: 21965686.5
(22) Date of filing: 29.11.2021
(51) Int. Cl.: H02K 5/16

(54) **ELECTRIC MOTOR AND AIR CONDITIONER**

(71) Applicant: Mitsubishi Electric Corporation, Tokyo 100-8310 (JP)
(72) Inventor: TAKAHASHI, Ryogo, Tokyo 100-8310 (JP); TSUCHIDA, Kazuchika, Tokyo 100-8310 (JP); WATANABE, Takanori, Tokyo 100-8310 (JP); SHIMOKAWA, Takaya, Tokyo 100-8310 (JP)
(74) Representative: Mewburn Ellis LLP
(86) International application number: PCT/JP2021/043547
(87) International publication number: WO 2023/095316

(57) **Abstract**

An electric motor (1) includes a rotor (2), a stator (3), a circuit board (4), a board-side molded resin (5), and a stator-side molded resin (6). The board-side molded resin (5) includes a first bearing housing (51) that holds a first bearing (23) and covers at least part of the circuit board (4). The stator-side molded resin (6) includes a second bearing housing (61) that holds a second bearing (24) and covers at least part of the stator (3).

## Description

### TECHNICAL FIELD

The present disclosure relates to an electric motor and an air conditioner.

### BACKGROUND ART

In general, in electric motors, when a bearing housing that holds a bearing is made of metal material, there is an electrical connection between the bearing and the bearing housing (Patent Reference 1).

### PRIOR ART REFERENCE

### PATENT REFERENCE

Patent Reference 1: Japanese Unexamined Patent Application Publication No. 2015-126583

### SUMMARY OF THE INVENTION

### PROBLEM TO BE SOLVED BY THE INVENTION

When there is the electrical connection between the bearing and the bearing housing, there is a problem in that noise in the electric motors due to electrolytic corrosion in the bearing or the bearing housing increases.

It is an object of the present disclosure to reduce noise in an electric motor due to electrolytic corrosion in a bearing or a bearing housing.

### MEANS OF SOLVING THE PROBLEM

An electric motor according to the present disclosure includes:
a stator;
a rotor disposed inside the stator and including a rotor core, a shaft provided inside the rotor core, first and second bearings rotatably supporting the shaft;
a circuit board facing the first bearing;
a board-side molded resin covering at least part of the circuit board and including a first bearing housing holding the first bearing; and
a stator-side molded resin that is a different component from the board-side molded resin, the stator-side molded resin covering at least part of the stator and including a second bearing housing holding the second bearing.

An air conditioner according to the present disclosure includes:
an indoor unit; and
an outdoor unit to be connected to the indoor unit, wherein
the indoor unit, the outdoor unit, or each of the indoor unit and the outdoor unit includes the electric motor.

### EFFECTS OF THE INVENTION

According to the present disclosure, noise in the electric motor due to electrolytic corrosion in the bearings or the bearing housings can be reduced.

FIG. 1 is a cross-sectional view schematically showing an electric motor according to a first embodiment.
FIG. 2 is a cross-sectional view schematically showing the structure of a first bearing housing.
FIG. 3 is an exploded view showing another example of the electric motor in cross section.
FIG. 4 is a cross-sectional view showing still another example of the electric motor.
FIG. 5 is a cross-sectional view showing still another example of the electric motor.
FIG. 6 is a cross-sectional view showing still another example of the electric motor.
FIG. 7 is a cross-sectional view showing still another example of the electric motor.
FIG. 8 is a cross-sectional view showing still another example of the electric motor.
FIG. 9 is a cross-sectional view showing still another example of the electric motor.
FIG. 10 is a diagram schematically showing the configuration of an air conditioner according to a second embodiment.

### MODE FOR CARRYING OUT THE INVENTION

### First Embodiment

An electric motor 1 according to an embodiment will be described hereafter.

In an xyz orthogonal coordinate system shown in each drawing, a z-axis direction (z-axis) represents a direction parallel to the axis A1 of the electric motor 1, an x-axis direction (x-axis) represents a direction orthogonal to the z-axis direction, and a y-axis direction (y-axis) represents a direction orthogonal to both the z-axis direction and the x-axis direction. The axis A1 refers to the rotation center of a rotor 2, that is, the rotation axis of the rotor 2. The direction parallel to the axis A1 is also referred to as the "axis direction of the rotor 2" or simply the "axis direction." A radial direction refers to a direction along a radius of the rotor 2, a stator 3, or a stator core 31, and refers to a direction orthogonal to the axis A1. An xy plane refers to a plane orthogonal to the axial direction. A circumferential direction of the rotor 2, the stator 3, or the stator core 31 is also simply referred to as the "circumferential direction."

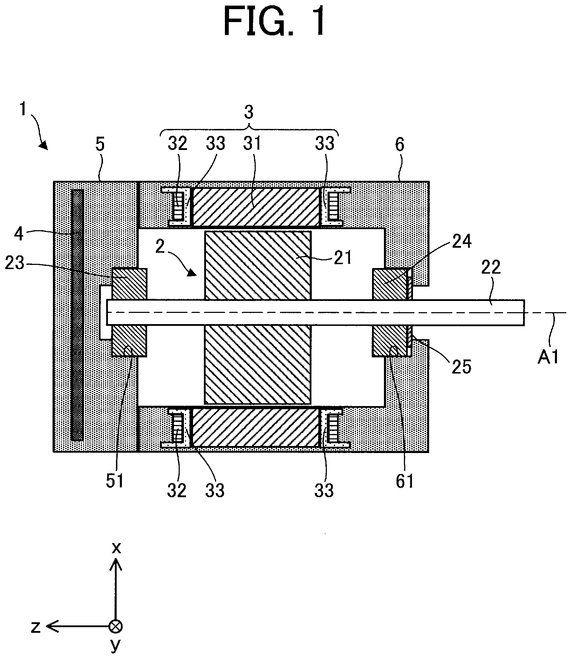

FIG. 1 is a cross-sectional view schematically showing an electric motor 1 according to a first embodiment.

The electric motor 1 includes the rotor 2, the stator 3, a circuit board 4, a board-side molded resin 5, and a stator-side molded resin 6. The electric motor 1 is, for example, a permanent magnet synchronous motor, but not limited to the permanent magnet synchronous motor.

### Rotor 2

The rotor 2 is rotatably disposed inside the stator 3. An air gap exists between the rotor 2 and the stator 3. The rotor 2 includes a rotor core 21 (also referred to as a "rotor yoke"), a shaft 22, a first bearing 23 (also referred to as a "board-side bearing"), a second bearing 24 (also referred to as a "stator-side bearing"), and a preloading member 25. The rotor 2 is rotatable about the rotation axis (i.e., axis A1). The rotor 2 may further include a permanent magnet to form the magnetic poles of the rotor 2. The rotor core 21 is provided between the first bearing 23 and the second bearing 24.

The shaft 22 is located inside the rotor core 21. The shaft 22 is rotatably supported by the first bearing 23 and the second bearing 24.

The first bearing 23 and the second bearing 24 rotatably support the shaft 22 of the rotor 2. In the example shown in FIG. 1, the first bearing 23 is located on the anti-load side of the electric motor 1 from the rotor core 21. The first bearing 23 rotatably supports the anti-load side of the shaft 22. In the example shown in FIG. 1, the second bearing 24 is located on the load side of the electric motor 1 from the rotor core 21. The second bearing 24 rotatably supports the load side of the shaft 22.

The first bearing 23 and the second bearing 24 are, for example, rolling bearings. When the first bearing 23 and the second bearing 24 are rolling bearings, vibration of the rotor 2 due to magnetic attractive force between the rotor 2 and the stator 3 can be prevented compared to plain bearings.

The preloading member 25 provides preload to the second bearing 24. The preloading member 25 is, for example, a compression spring.

### Stator 3

As shown in FIG. 1, the stator 3 includes a stator core 31, at least one winding 32 (also referred to as a stator winding), and at least one insulator 33.

The stator core 31 is a cylindrical core. For example, the stator core 31 is formed of a plurality of electrical steel sheets laminated in the axial direction. In this case, each of the plurality of electrical steel sheets is formed into a predetermined shape with blanking. These electrical steel sheets are fixed to each other by caulking, welding, gluing, or the like.

The winding 32 is, for example, a magnet wire. The winding 32 is wound on the insulator 33. The winding 32 is wound on the insulator 33, thereby forming a coil. The winding 32 is electrically connected to the terminals of the circuit board 4.

The insulator 33 is a thermoplastic resin, such as polybutylene terephthalate (PBT), for example. The insulator 33 electrically insulates the stator core 31. For example, the insulator 33 is unitedly molded with the stator core 31. However, the insulator 33 may be molded in advance, and then the molded insulator 33 may be combined with the stator core 31.

### Circuit Board 4

The circuit board 4 includes driving circuitry such as a power transistor. The circuit board 4 faces the first bearing 23. The circuit board 4 is electrically connected to the winding 32.

### Board-Side Molded Resin 5

The board-side molded resin 5 includes a first bearing housing 51 (also referred to as a "board-side bearing housing"). The first bearing housing 51 holds the first bearing 23. The board-side molded resin 5 covers at least part of the circuit board 4. The board-side molded resin 5 is, for example, a non-conductive resin. As shown in FIG. 1, the board-side molded resin 5 may cover the whole circuit board 4. The board-side molded resin 5 is, for example, a thermosetting resin such as a bulk molding compound (BMC).

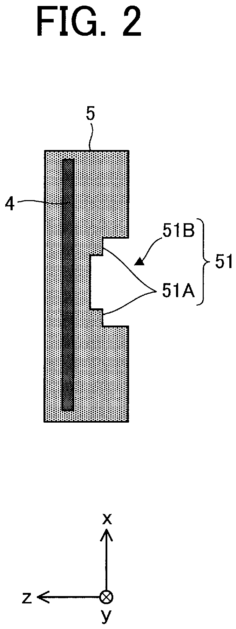

FIG. 2 is a cross-sectional view schematically showing the structure of the first bearing housing 51.

The first bearing housing 51 includes a bottom surface 51A and an opening 51B. The bottom surface 51A faces the first bearing 23. In the example shown in FIG. 1, the bottom surface 51A supports the first bearing 23 in the axial direction. The opening 51B is formed on the opposite side from the circuit board 4 with the bottom surface 51A in between in the axial direction.

It is preferable that the board-side molded resin 5 be an insulating material. In this case, the board-side molded resin 5 is an insulating resin.

### Stator-Side Molded Resin 6

The stator-side molded resin 6 is a different component from the board-side molded resin 5. The stator-side molded resin 6 includes a second bearing housing 61 (also referred to as a "stator-side bearing housing"). The second bearing housing 61 holds the second bearing 24. The stator-side molded resin 6 covers at least part of the stator 3. The stator-side molded resin 6 is, for example, a non-conductive resin. As shown in FIG. 1, the stator-side molded resin 6 may cover all of the stator 3. The stator-side molded resin 6 is, for example, a thermosetting resin such as a bulk molding compound (BMC).

It is preferable that the stator-side molded resin 6 be an insulating material. In this case, the stator-side molded resin 6 is an insulating resin.

### First Modification

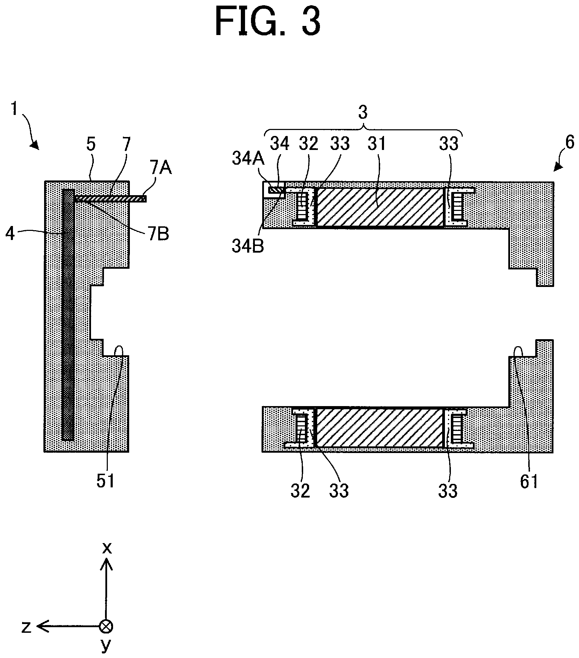

FIG. 3 is an exploded view showing another example of the electric motor 1 in cross section. The rotor 2 is omitted in the example shown in FIG. 3, but the rotor 2 shown in FIG. 1 can be applied to the electric motor 1 shown in FIG. 3.

The electric motor 1 shown in FIG. 3 further includes a board-side terminal 7 electrically connected to the circuit board 4. The stator 3 shown in FIG. 3 includes a winding 32 and a stator-side terminal 34 electrically connected to the winding 32.

One end 7A of the board-side terminal 7 is directly connected to the stator-side terminal 34, while the other end 7B of the board-side terminal 7 is electrically connected to the circuit board 4 (e.g., driving circuitry) . The end 7A of the board-side terminal 7 may be electrically connected to the stator-side terminal 34 through a lead wire. As shown in FIG. 3, the end 7A of the board-side terminal 7 is exposed outside the board-side molded resin 5.

One end 34A of the stator-side terminal 34 is directly connected to the board-side terminal 7, while the other end 34B of the stator-side terminal 34 is electrically connected to the winding 32. The end 34A of the stator-side terminal 34 may be electrically connected to the board-side terminal 7 through a lead wire. The end 34A of the stator-side terminal 34 is exposed outside the stator-side molded resin 6.

### Second Modification

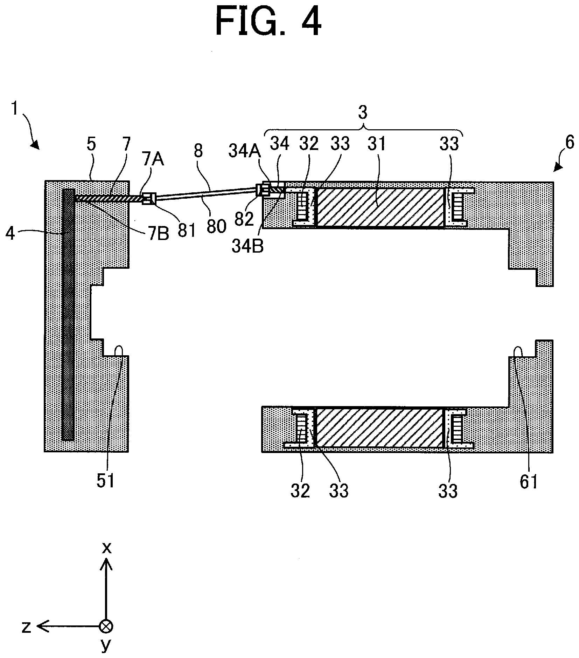

FIG. 4 is a cross-sectional view showing still another example of the electric motor 1. The rotor 2 is omitted in the example shown in FIG. 4, but the rotor 2 shown in FIG. 1 can be applied to the electric motor 1 shown in FIG. 4.

The electric motor 1 shown in FIG. 4 includes a lead wire 8 that electrically connects the end 7A of the board-side terminal 7 and the end 34A of the stator-side terminal 34. The lead wire 8 includes a conductor 80 and lead wire terminals 81 and 82 connected to both ends of the conductor 80 respectively. The lead wire terminal 81 is also referred to as a first lead wire terminal 81, and the lead wire terminal 82 is also referred to as a second lead wire terminal 82. The first lead wire terminal 81 is connected to the end 7A of the board-side terminal 7, and the second lead wire terminal 82 is connected to the end 34A of the stator-side terminal 34.

### Third Modification

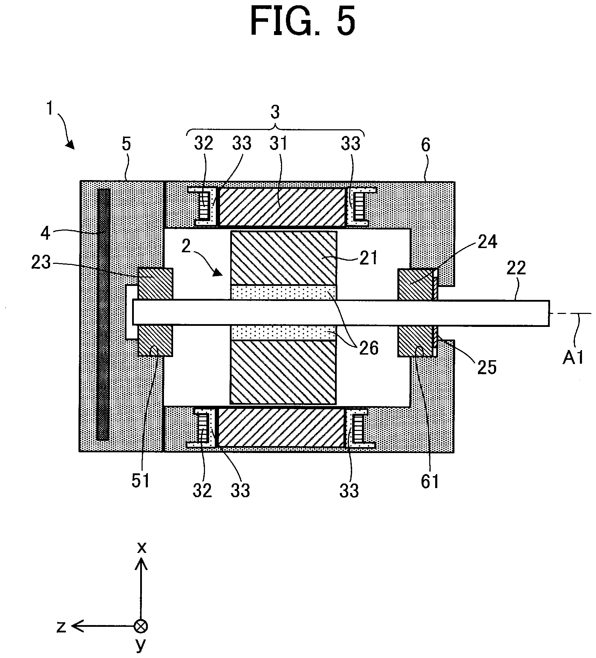

FIG. 5 is a cross-sectional view showing still another example of the electric motor 1.

The electric motor 1 shown in FIG. 5 further includes a resin 26 provided between the rotor core 21 and the shaft 22. The resin 26 is also referred to as a "fixing resin". In the electric motor 1 shown in FIG. 5, the shaft 22 is spaced apart from the rotor core 21. It is preferable that the resin 26 be an insulating resin.

### Fourth Modification

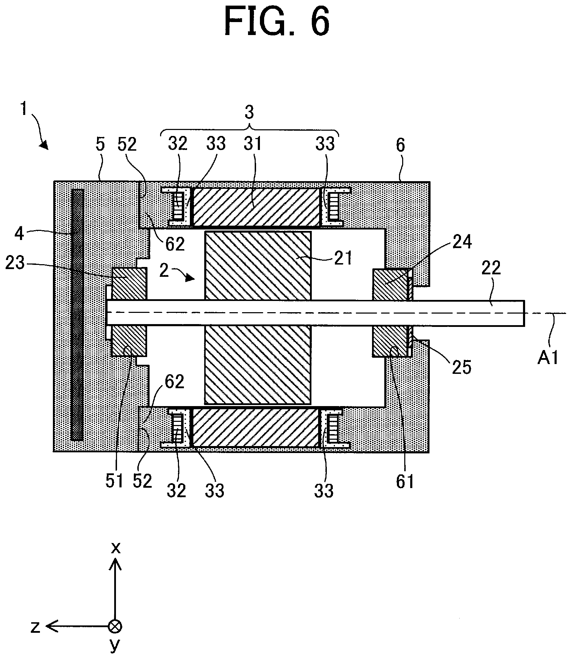

FIG. 6 is a cross-sectional view showing still another example of the electric motor 1.

In the electric motor 1 shown in FIG. 6, the board-side molded resin 5 and the stator-side molded resin 6 are assembled with each other by press fit.

The board-side molded resin 5 includes at least one first press-fit portion 52 (also referred to as a "board-side press-fit portion") that is combined with the stator-side molded resin 6. The first press-fit portion 52 includes a first press-fit portion 52 that is combined with the stator-side molded resin 6. The first press-fit portion 52 is, for example, a protruding portion or a concave portion.

The stator-side molded resin 6 includes at least one second press-fit portion 62 (also referred to as a "stator-side press-fit portion") that is combined with the board-side molded resin 5. The second press-fit portion 62 is, for example, a protruding portion or a concave portion.

### Fifth Modification

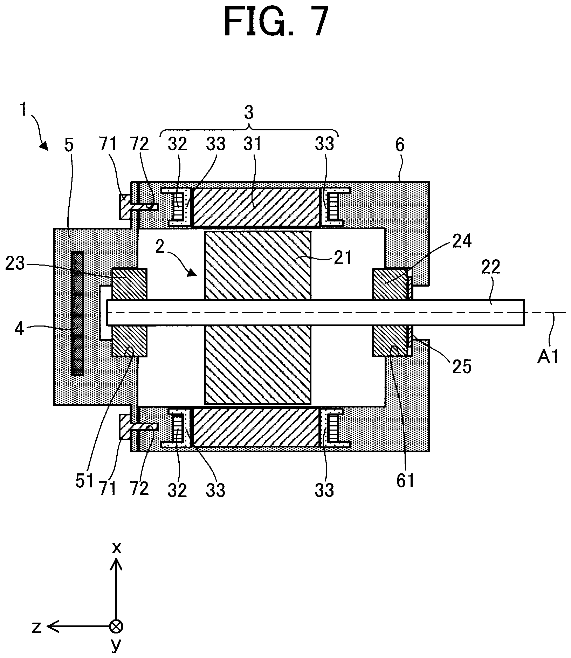

FIG. 7 is a cross-sectional view showing still another example of the electric motor 1.

In the example shown in FIG. 7, the electric motor 1 includes of a fixing part 71 (also referred to as a "first fixing part" or a "board-side fixing part") provided in the board-side molded resin 5 and a fixing part 72 (also referred to as a "second fixing part" or a "stator-side fixing part") provided in the stator-side molded resin 6. The stator-side molded resin 6 includes the first fixing part 71 and the stator-side molded resin 6. For example, the first fixing part 71 is fixed to the second fixing part 72, and thus the board-side molded resin 5 and the stator-side molded resin 6 are fixed to each other.

The board-side molded resin 5 and the stator-side molded resin 6 are combined with each other, for example, by a screw. In this case, the first fixing part 71 is, for example, a male screw for combining the board-side molded resin 5 with the stator-side molded resin 6, and the second fixing part 72 is, for example, a female screw embedded in the stator-side molded resin 6. The male screw as the first fixing part 71 is fixed to the female screw as the second fixing part 72.

When the first fixing part 71 is a male screw for combining the board-side molded resin 5 with the stator-side molded resin 6, the second fixing part 72 may be a hole formed in the stator-side molded resin 6. In this case, the male screw as the first fixing part 71 is fixed to the hole as the second fixing part 72. When the first fixing part 71 is fixed to the second fixing part 72, the second fixing part 72 as a component (e.g., a component made of thermoplastic resin) other than a screw may be embedded in the stator-side molded resin 6.

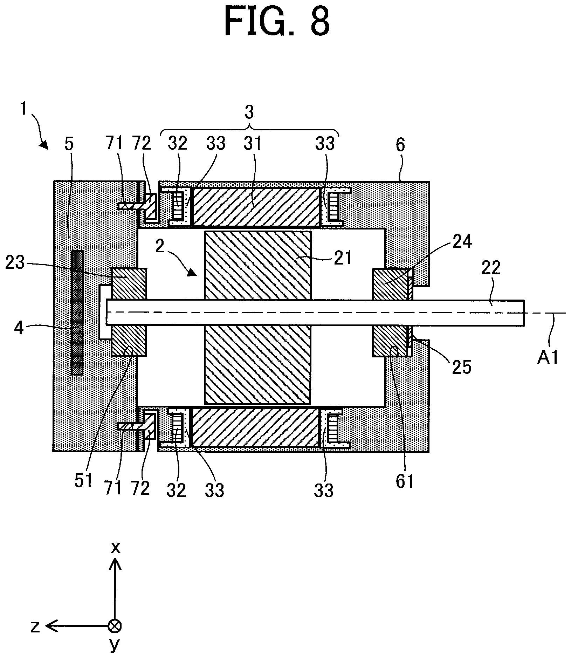

FIG. 8 is a cross-sectional view showing still another example of the electric motor 1.

As shown in FIG. 8, the second fixing part 72 may be a male screw for combining the stator-side molded resin 6 with the board-side molded resin 5, and the first fixing part 71 may be a female screw embedded in the board-side molded resin 5. The male screw as the second fixing part 72 is fixed to the female screw as the first fixing part 71.

When the second fixing part 72 is a male screw for combining the stator-side molded resin 6 with the board-side molded resin 5, the first fixing part 71 may be a hole formed in the board-side molded resin 5. In this case, the male screw as the second fixing part 72 is fixed to the hole as the first fixing part 71. When the second fixing part 72 is fixed to the first fixing part 71, the first fixing part 71 as a component (e.g., a component made of thermoplastic resin) other than a screw may be embedded in the board-side molded resin 5.

### Sixth Modification

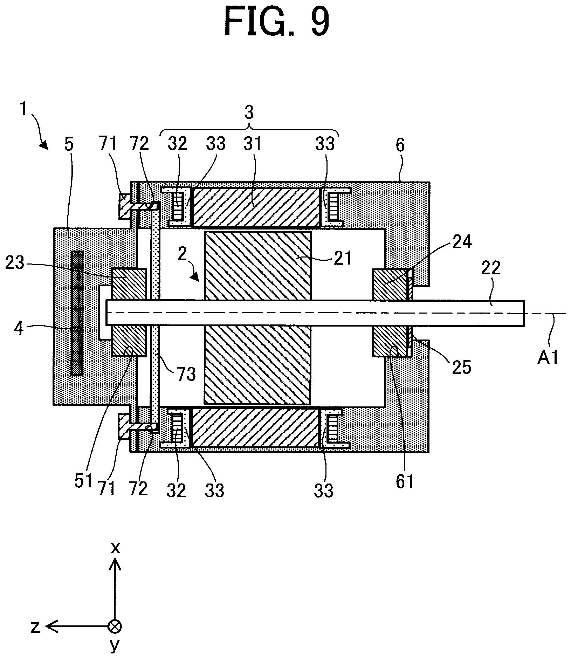

FIG. 9 is a cross-sectional view showing still another example of the electric motor 1.

In the example shown in FIG. 9, the electric motor 1 includes an insulating member 73 provided in the stator 3. The insulating member 73 is fixed to the stator-side molded resin 6, for example. The second fixing part 72 (e.g., a female screw) is united with the insulating member 73 by the stator-side molded resin 6.

### Advantages of Present Embodiment

In general, when a bearing housing that holds a bearing is made of metal material in electric motors, there is an electrical connection between the bearing and the bearing housing. In this case, noise in the electric motors increases due to electrolytic corrosion in the bearing or the bearing housing.

According to the present embodiment, the board-side molded resin 5 (e.g., the first bearing housing 51) holds the first bearing 23, and the stator-side molded resin 6 (e.g., the second bearing housing 61) holds the second bearing 24, thereby reducing noise in the electric motor 1 due to electrolytic corrosion in the first bearing 23, the second bearing 24, the first bearing housing 51, or the second bearing housing 61 compared to bearing housings made of metal materials.

According to the present embodiment, since the board-side molded resin 5 covers at least part of the circuit board 4, a foreign object can be prevented from entering the circuit board 4. When the board-side molded resin 5 covers the whole circuit board 4, it is possible to effectively prevent a foreign object from entering into the circuit board 4.

According to the present embodiment, since the stator-side molded resin 6 covers at least part of the stator 3, the rigidity of the entire stator 3 can be enhanced. As a result, noise in the electric motor 1 during the rotation of the rotor 2 can be reduced. When the stator-side molded resin 6 covers all of the stator 3, the rigidity of the entire stator 3 can be enhanced and the noise in the electric motor 1 during the rotation of the rotor 2 can be further reduced.

When the first bearing housing 51 is an insulating resin and the second bearing housing 61 is an insulating resin, the noise in the electric motor 1 due to electrolytic corrosion in the first bearing 23, the second bearing 24, the first bearing housing 51, or the second bearing housing 61 can be effectively reduced compared to bearing housings made of metal materials.

In the example shown in FIG. 1, the first bearing housing 51 includes the bottom surface 51A and the opening 51B. The bottom surface 51A faces the first bearing 23. In the example shown in FIG. 1, the bottom surface 51A supports the first bearing 23 in the axial direction. The opening 51B is formed on the opposite side from the circuit board 4 with the bottom surface 51A in between in the axial direction. In this case, the first bearing 23 is supported on the opposite side from the circuit board 4 with the bottom surface 51A in between in the axial direction. Therefore, the area of the circuit board 4 can be increased, and the insulation performance for the circuit board 4 and the heat dissipation performance of the circuit board 4 can be improved.

The rotor core 21 is provided between the first bearing 23 and the second bearing 24. In this case, noise due to the vibration of the rotor 2 can be reduced.

When the board-side molded resin 5 is a thermosetting resin and the stator-side molded resin 6 is a thermosetting resin, the first bearing housing 51 and the second bearing housing 61 can be molded with high precision. As a result, noise such as friction noise in the first bearing housing 51 and the second bearing housing 61 can be reduced during the rotation of the rotor 2.

In the first modification, the end 7A of the board-side terminal 7 is exposed outside the board-side molded resin 5, and the end 34A of the stator-side terminal 34 is exposed outside the stator-side molded resin 6. In this case, the end 7A of the board-side terminal 7 and the end 34A of the stator-side terminal 34 can be easily connected.

In the second modification, the electric motor 1 includes the lead wire 8 that electrically connects the end 7A of the board-side terminal 7 and the end 34A of the stator-side terminal 34. In this case, the end 7A of the board-side terminal 7 and the end 34A of the stator-side terminal 34 can be easily connected electrically, regardless of the position of the board-side terminal 7 and the stator-side terminal 34.

In the third modification, the electric motor 1 further includes the resin 26 provided between the rotor core 21 and the shaft 22, and the shaft 22 is spaced apart from the rotor core 21. In this case, the shaft 22 can be effectively insulated from the rotor core 21. As a result, the noise in the electric motor 1 due to electrolytic corrosion in the first bearing 23 or the second bearing 24 can be further reduced.

In the fourth modification, the board-side molded resin 5 and the stator-side molded resin 6 are assembled with each other by press fit. In this case, the board-side molded resin 5 and the stator-side molded resin 6 can be fixed without using fixing parts such as screws.

The board-side molded resin 5 and the stator-side molded resin 6 may be assembled to each other with a screw. In this case, the required level of dimensions of the board-side molded resin 5 and the stator-side molded resin 6 can be reduced compared to press fit. As a result, the manufacturing cost of the electric motor 1 can be reduced.

When a male screw as the first fixing part 71 is fixed to a female screw as the second fixing part 72 embedded in the stator-side molded resin 6, the board-side molded resin 5 and the stator-side molded resin 6 can be fixed more strongly.

When a male screw as the second fixing part 72 is fixed to a female screw as the first fixing part 71 embedded in the board-side molded resin 5, the board-side molded resin 5 and the stator-side molded resin 6 can be fixed more strongly.

A male screw as the first fixing part 71 may be fixed in a hole as the second fixing part 72 embedded in the stator-side molded resin 6. In this case, the second fixing part 72 is, for example, a component made of thermoplastic resin. This configuration allows the first fixing part 71 to be firmly fixed to the second fixing part 72.

A male screw as the second fixing part 72 may be fixed in a hole as the first fixing part 71 embedded in the board-side molded resin 5. In this case, the first fixing part 71 is, for example, a component made of thermoplastic resin. This configuration allows the second fixing part 72 to be firmly fixed to the first fixing part 71.

In the sixth modification, the second fixing part 72 (e.g., a female screw) is united with the insulating member 73 by the stator-side molded resin 6. In this case, the second fixing part 72 can be easily positioned, and the second fixing part 72, the insulating member 73, and the stator core 31 can be easily united by the stator-side molded resin 6.

### Second Embodiment

An air conditioner 10 (also referred to as a refrigerating and air conditioning apparatus or a refrigeration cycle apparatus) according to a second embodiment will be described.

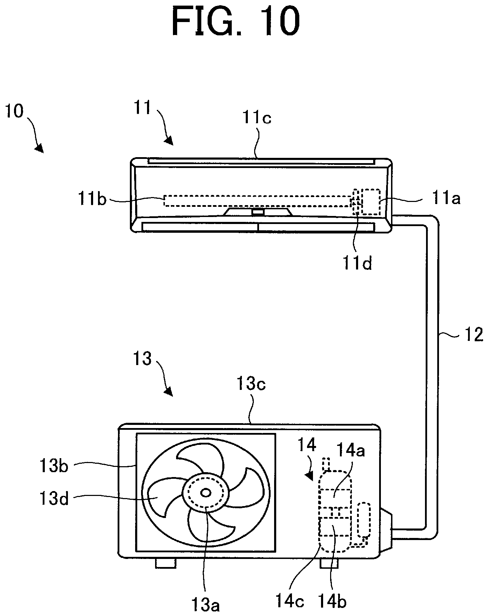

FIG. 10 is a diagram schematically showing the configuration of the air conditioner 10 according to the second embodiment.

The air conditioner 10 according to the second embodiment includes an indoor unit 11 as a blower (also referred to as a first blower) and an outdoor unit 13 as a blower (also referred to as a second blower) to be connected to the indoor unit 11.

In the present embodiment, the air conditioner 10 includes the indoor unit 11, a refrigerant piping 12, and the outdoor unit 13. For example, the outdoor unit 13 is connected to the indoor unit 11 through the refrigerant piping 12.

The indoor unit 11 includes an electric motor 11a (e.g., the electric motor 1 according to the first embodiment), a blowing unit 11b that blows air by being driven by the electric motor 11a, and a housing 11c that covers the electric motor 11a and the blowing unit 11b. The blowing unit 11b includes, for example, a blade 11d to be driven by the electric motor 11a. For example, the blade 11d is fixed to the shaft of the electric motor 11a and generates airflow.

The outdoor unit 13 includes an electric motor 13a (e.g., the electric motor 1 according to the first embodiment), a blowing unit 13b, a compressor 14, a heat exchanger (not shown), and a housing 13c that covers the blowing unit 13b, the compressor 14, and the heat exchanger. The blowing unit 13b is driven by the electric motor 13a and sends air. The blowing unit 13b includes, for example, a blade 13d to be driven by the electric motor 13a. For example, the blade 13d is fixed to the shaft of the electric motor 13a and generates airflow. The compressor 14 includes an electric motor 14a (e.g., the electric motor 1 according to the first embodiment), a compression mechanism 14b (e.g., a refrigerant circuit) to be driven by the electric motor 14a, and a housing 14c that covers the electric motor 14a and the compression mechanism 14b.

In the air conditioner 10, at least one of the indoor unit 11 or the outdoor unit 13 includes the electric motor 1 described in the first embodiment. That is, the indoor unit 11, the outdoor unit 13, or each of the indoor unit 11 and the outdoor unit 13 includes the electric motor 1 described in the first embodiment. Specifically, the electric motor 1 described in the first embodiment is applied to at least one of the electric motors 11a or 13a as a driving source of the air blowing unit. In other words, the electric motor 1 described in the first embodiment is applied to the indoor unit 11, the outdoor unit 13, or each of the indoor unit 11 and the outdoor unit 13. The electric motor 1 described in the first embodiment may be applied to the electric motor 14a of the compressor 14.

The air conditioner 10 can perform air conditioning, for example, cooling operation in which cold air is blown from the indoor unit 11 or heating operation in which warm air is blown from the indoor unit 11. In the indoor unit 11, the electric motor 11a is a driving source for driving the blowing unit 11b. The blowing unit 11b can blow conditioned air.

In the indoor unit 11, the electric motor 11a is fixed to the housing 11c of the indoor unit 11, for example, by a screw. In the outdoor unit 13, the electric motor 13a is fixed to the housing 13c of the outdoor unit 13, for example, by a screw.

In the air conditioner 10 according to the second embodiment, since the electric motor 1 described in the first embodiment is applied to at least one of the electric motors 11a or 13a, the same advantages as those described in the first embodiment can be obtained. As a result, noise in the air conditioner 10 can be reduced.

In addition, when the electric motor 1 according to the first embodiment is used as the driving source of a blower (e.g., indoor unit 11), the same advantages described in the first embodiment can be obtained. As a result, noise in the blower can be reduced. The blower including the electric motor 1 according to the first embodiment and the blade (e.g., blade 11d or 13d) to be driven by the electric motor 1 can be used alone as a device to send air. The blower can also be applied to devices other than the air conditioner 10.

In addition, when the electric motor 1 according to the first embodiment is used as the driving source of the compressor 14, the same advantages described in the first embodiment can be obtained. As a result, noise in the compressor 14 can be reduced.

In addition to the air conditioner 10, the electric motor 1 described in the first embodiment can be mounted on equipment that includes a driving source, such as ventilators, home appliances, or machine tools.

The features in each of the above described embodiments and modifications can be combined with each other.

### DESCRIPTION OF REFERENCE CHARACTERS

1, 11a, 13a electric motor, 2 rotor, 3 stator, 4 circuit board, 5 board-side molded resin, 6 stator-side molded resin, 7 board-side terminal, 8 lead wire, 10 air conditioner, 11 indoor unit, 13 outdoor unit, 21 rotor core, 22 shaft, 23 first bearing, 24 second bearing, 31 stator core, 32 winding, 33 insulator, 34 stator-side terminal, 51 first bearing housing, 51A bottom surface, 51B opening, 61 second bearing housing, 71 fixing part (first fixing part), 72 fixing part (second fixing part), 73 insulating member.

## Claims

1. An electric motor comprising:
a stator;
a rotor disposed inside the stator and including a rotor core, a shaft provided inside the rotor core, first and second bearings rotatably supporting the shaft;
a circuit board facing the first bearing;
a board-side molded resin covering at least part of the circuit board and including a first bearing housing holding the first bearing; and
a stator-side molded resin that is a different component from the board-side molded resin, the stator-side molded resin covering at least part of the stator and including a second bearing housing holding the second bearing.

2. The electric motor according to claim 1 further comprising a board-side terminal electrically connected to the circuit board, wherein
the stator includes a winding and a stator-side terminal electrically connected to the winding,
an end of the board-side terminal is exposed outside the board-side molded resin, and
an end of the stator-side terminal is exposed outside the stator-side molded resin.

3. The electric motor according to claim 1 further comprising a lead wire that electrically connects the end of the board-side terminal and the end of the stator-side terminal.

4. The electric motor according to any one of claims 1 to 3, wherein
the first bearing housing includes:
a bottom surface facing the first bearing; and
an opening formed on an opposite side from the circuit board with the bottom surface in between in an axial direction.

5. The electric motor according to any one of claims 1 to 4, wherein the rotor core is provided between the first bearing and the second bearing.

6. The electric motor according to any one of claims 1 to 5, wherein the board-side molded resin is a thermosetting resin, and the stator-side molded resin is a thermosetting resin.

7. The electric motor according to any one of claims 1 to 7 further comprising a resin provided between the rotor core and the shaft, wherein
the shaft is spaced apart from the rotor core.

8. The electric motor according to any one of claims 1 to 7, wherein the board-side molded resin and the stator-side molded resin are assembled with each other by press fit.

9. The electric motor according to any one of claims 1 to 7, wherein the board-side molded resin and the stator-side molded resin are combined with each other by a screw.

10. The electric motor according to any one of claims 1 to 7 further comprising:
a female screw embedded in the stator-side molded resin; and
a male screw to combine the board-side molded resin with the stator-side molded resin, wherein
the male screw is fixed to the female screw.

11. The electric motor according to any one of claims 1 to 7 further comprising:
a female screw embedded in the board-side molded resin; and
a male screw to combine the stator-side molded resin with the board-side molded resin, wherein
the male screw is fixed to the female screw.

12. The electric motor according to claim 11 further comprising an insulating member provided in the stator, wherein
the female screw is united with the insulating member by the stator-side molded resin.

13. The electric motor according to any one of claims 1 to 7 further comprising:
a fixing part provided in the board-side molded resin; and
a male screw to combine the stator-side molded resin with the board-side molded resin, wherein
the male screw is fixed to the fixing part.

14. The electric motor according to any one of claims 1 to 7 further comprising:
a fixing part embedded in the stator-side molded resin; and
a male screw to combine the board-side molded resin with the board-side molded resin, wherein
the male screw is fixed to the fixing part.

15. An air conditioner comprising:
an indoor unit; and
an outdoor unit to be connected to the indoor unit, wherein
the indoor unit, the outdoor unit, or each of the indoor unit and the outdoor unit includes the electric motor according to any one of claims 1 to 14.
